Europäisches Patentamt

European Patent Office

Office européen des brevets

(11) Numéro de publication: **0 088 002**
**B1**

(19)

# (12) FASCICULE DE BREVET EUROPEEN

(45) Date de publication du fascicule du brevet:
16.10.85

(51) Int. Cl.⁴: **B 01 D 13/00**

(21) Numéro de dépôt: 83400330.3

(22) Date de dépôt: **16.02.83**

(54) Procédé d'extraction liquide-liquide de métaux à l'aide d'une microémulsion, à partir d'une solution aqueuse.

(30) Priorité: **26.02.82 FR 8203231**

(43) Date de publication de la demande:
**07.09.83 Bulletin 83/36**

(45) Mention de la délivrance du brevet:
**16.10.85 Bulletin 85/42**

(84) Etats contractants désignés:
**DE GB IT**

(56) Documents cités:
**FR - A - 2 151 777**
**FR - A - 2 374 931**
**FR - A - 2 469 194**
**US - A - 3 454 489**

CHEMICAL ABSTRACTS, vol. 94, 1981, page 365, no. 214287p, Columbus, Ohio, USA, P. PAKALNS: "The effect of surfactants on the mixed chelate extraction-atomic absorption spectrophotometric determination of copper, nickel, iron, cobalt, cadmium, zinc and lead"
CHEMICAL ABSTRACTS, vol. 86, 1977, page 338, no. 176727g, Columbus, Ohio, USA, P. PAKALNS: "The effect of surfactants on the extraction atomic absorption spectrophotometric determination of copper; iron, manganese, lead, nickel, zinc, cadmium and cobalt"

(56) Documents cités: (suite)
**HYDROMETALLURGY, vol. 5, nos. 2,3, février 1980, pages 243-254, Amsterdam, NL., J. STRZELBICKI et al.: "The liquid surfactant membrane separation of copper, cobalt and nickel from multicomponent aqueous solutions"**
**CHEMIE INGENIEUR TECHNIK, vol. 53, no. 12, page 982, Nürnberg, DE., "Selektive Trennung von Metall-Ionen durch Flüssigkeits-Membrane"**
**COMPTE RENDU de L'ACADEMIE DES SCIENCES, t 292, Série II, 6 avril 1981, pages 1019-1022, Paris, FR. S. BAUER et al.: "Existence d'une microémulsion dans les systèmes d'extraction du gallium par la beta-dodécényl-7 hydroxy-8 quinoléine dite (Kelex 100)**

**Le dossier contient des Informations techniques présentées postérieurement au dépôt de la demande et ne figurant pas dans le présent fascicule.**

(73) Titulaire: **SOCIETE NATIONALE ELF AQUITAINE, Tour Aquitaine, F-92400 Courbevoie (FR)**

(72) Inventeur: **Bauer, Denise, 8 bis Allée de la Fontaine, F-93340 Le Raincy (FR)**
Inventeur: **Komornicki, Jacques, 12 Lotissement Curt, F-64230 Lescar (FR)**
Inventeur: **Tellier, Jacques, Chemin des Vignes Lons, F-64140 Billere (FR)**

(74) Mandataire: **Kohn, Armand, 5 Avenue Foch, F-92380 Garches (FR)**

## Description

La présente invention concerne un procédé perfectionné pour l'extraction de différents métaux à partir de solutions aqueuses de leurs composés, au moyen d'une microémulsion. Elle se rapporte notamment à l'extraction à l'aide d'un liquide non miscible à l'eau, renfermant un réactif capable de donner avec le métal voulu une combinaison soluble dans le liquide en question.

On connaît l'extraction liquide-liquide, dans laquelle on agite une phase aqueuse, renfermant des composés métalliques dissous, avec une phase organique, non miscible avec l'eau, mais qui contient un réactif susceptible de donner, avec un métal déterminé, une combinaison soluble dans la phase organique; cette méthode est souvent utilisée à l'heure actuelle; elle permet de récupérer le métal voulu, sous la forme d'un sel soluble dans l'eau, à partir de la phase organique qui s'est enrichie en ce métal par l'agitation avec la solution aqueuse initiale. Cette méthode s'applique à un grand nombre de métaux, notamment à ceux des groupes II à VIII de la Classification périodique des Eléments. La technique connue consiste généralement à dissoudre dans la phase organique, constituée le plus souvent par des solvants hydrocarbonés, un réactif, dit «extractant», susceptible de former un complexe avec le cation recherché de la solution initiale. Les plus usités parmi ces extractants sont actuellement des dérivés organo phosphorés, de l'hydroxy-8-quinoléine, des α ou β hydroxy-oximes, des amines grasses, etc. Ainsi, sait-on extraire du nickel, du Fe, du Ge, de l'Al, de l'U, du Pt, du Rh, etc., à partir de solutions aqueuses de leurs sels au moyen du kérosène dans lequel on a dissous au préalable du phosphate de bis (éthyl-2-hexyle), de dithiophosphate de bis (diisobutyl-méthyle), de la (nonyl-3-propényl-1)-7-hydroxy-8-quinoléine, de l'hydroxy-2 nonyl-5 acétophénone oxime.

Bien que les extractions, suivant cette technique, puissent se faire avec d'excellents rendements, elles présentent quelquefois l'inconvénient d'être lentes, ce qui constitue une gêne au point de vue industriel. En effet, l'extraction demande au moins une demi-heure, et le plus souvent on est obligé de maintenir en contact intime, avec agitation, les deux phases immiscibles, pendant plusieurs heures. Un progrès considérable, au point de vue de la rapidité de l'extraction, a été réalisé par un mode opératoire, dans lequel un agent tensioactif et un cotensioactif sont ajoutés, ce qui fait que la phase organique séparée est constituée par une microémulsion: dans ces conditions, le passage du métal recherché, dans la phase organique, est très rapide, et l'extraction ne dure plus que quelques minutes ou même quelques secondes, mais les taux d'extraction sont alors faible. De plus, dans les rares applications de ce dernier procédé, faites jusqu'à présent, on s'est heurté à la tendance à l'inclusion des impuretés, dans la phase utile, séparée; cela vient de ce que la microémulsion contient des proportions sensibles de solution aqueuse initiale, dont les impuretés se retrouvent ainsi dans le produit de la réextraction.

La présente invention résulte de la constatation que, non seulement le taux d'extraction peut être considérablement accru, mais également la pureté des produits obtenus peut être améliorée, si la microémulsion est produite en présence d'une phase aqueuse de pH compris entre environ 0,5 et 8.

D'autre part, suivant un autre trait de l'invention, les tensioactifs employés sont des agents anioniques ou de préférence non ioniques, c'est-à-dire des composés qui produisent la microémulsion, en présence d'un cotensioactif, en milieu faiblement acide ou neutre.

Le procédé perfectionné suivant l'invention, qui consiste à effectuer l'extraction d'un composé métallique à partir d'une solution aqueuse, au moyen d'un liquide hydrophobe en produisant une microémulsion qui prend la place d'une des deux phases, est caractérisé en ce que la solution aqueuse, traitée, présente un pH d'environ 0,5 à 8 et que l'agent tensioactif employé est non ionique ou anionique, actif dans ce domaine de pH.

Le procédé de l'invention peut être pratiqué de deux manières différentes: la microémulsion peut être du type Winsor I ou du type Winsor II: c'est-à-dire que les proportions de tensioactif et cotensioactif peuvent être réglées de façon que la microémulsion prenne la place de la phase aqueuse (W I) surmontée par le liquide hydrophobe dans lequel est passé le métal à extraire, ou bien la place de la phase hydrophobe surnageante (W II).

La première de ces formes d'exécution (W I) présente l'avantage d'une facilité de réextraction du métal voulu, puisqu'il suffit pour cela de traiter le liquide surnageant, séparé de la microémulsion. Toutefois, comme le composé tensioactif se trouve alors principalement dans la phase aqueuse, microémulsionnée, sa récupération exige le recyclage de la phase aqueuse ou bien la résolution de la microémulsion pour en retirer le tensioactif et la fraction de liquide hydrophobe contenant l'extractant.

La seconde forme d'exécution (W II) comporte l'avantage de n'entraîner pratiquement aucune perte par la phase aqueuse, décantée, mais la microémulsion surnageante, dont la phase dispersante est le liquide hydrophobe, contient de la solution aqueuse initiale avec ses impuretés, qu'il faudrait séparer avant d'effectuer la réextraction du métal du liquide hydrophobe.

Or, suivant un des traits de la présente invention, cette séparation peut devenir inutile, car il est possible de réduire considérablement la teneur en eau de la microémulsion surnageante (du W II) par rapport à ce qui se présentait dans l'art antérieur. On sait par exemple que dans la séparation du Ga en milieu alcalin (Compte Rendu de l'Acad. des Sc. Paris t. 292 (6 avril 1981) Série II, page 1020) les teneurs en eau de la phase organique sont de l'ordre de 65 à 140 g/l, alors que, grâce à la présente invention, cette teneur peut être abaissée au-dessous de 23 g/l.

En ce qui concerne la nature des liquides hydrophobes, appelés «diluants» dans cette technique, elle est celle des procédés connus, c'est-à-dire principalement hydrocarbures, éventuellement halogénés, par exemple dodécane, kérosène, benzène, solvant naphta, chloroforme, tétrachlorure de carbone, etc. Il en est de même des extractants déjà mentionnés plus haut, ainsi que des cotensioactifs. Ces derniers sont surtout des alcools en $C_3$ à $C_{16}$, primaires, secondaires ou tertiaires, à chaîne linéaire ou ramifiée, des alkyl glycols à chaîne hydrocarbonée comportant 3 à 16 atomes de carbone, éventuellement des amines primaires, secondaires ou tertiaires; conviennent d'ailleurs, d'une façon générale, les composés lipophiles comportant un groupe polaire.

Les proportions de tensioactif non ionique ou anionique et de cotensioactif dépendent de la nature de chacun d'eux, de celle du diluant, ainsi que des composants de la solution aqueuse en présence; ces proportions ne peuvent donc pas être indiquées à priori. On peut néanmoins admettre, avec une certaine approximation, que la concentration des tensioactifs les plus efficaces se situe entre 0,01 et 0,5 moles/l de diluant, et de préférence entre 0,02 et 0,25 moles/l. Quant aux proportions d'alcool, elles sont en général de 0,03 à 0,5 volume par volume de diluant, et de préférence de 0,05 à 0,4.

Bien que les exemples, donnés plus loin, portent sur l'extraction de quelques métaux particuliers, le procédé perfectionné, suivant l'invention, s'applique à bien d'autres métaux, tout comme les méthodes connues de l'art antérieur.

Dans les exemples non limitatifs 1 à 7 qui suivent, les extractions sont effectuées comme suit.

Dans 1 litre de kérosène, on dissout une faction de mole de l'extractant, une quantité appropriée d'agent tensioactif et on y ajoute un volume déterminé d'alcool. Cette solution kérosénique et ensuite mélangée avec 1 l de solution renfermant un sel du métal à extraire. On obtient ainsi, rapidement, deux phases: la phase supérieure, homogène et transparente, est une microémulsion de l'eau dans du kérosène. La phase inférieure est consituée par la solution aqueuse initiale, dont le métal voulu a été extrait et se retrouve dans le kérosène de la phase supérieure. Le temps de séparation de ces deux phases est donc celui de l'extraction du métal: on le note, et c'est lui qui figure dans les exemples comme temps de l'extraction en minutes.

## Exemples 1 à 6

Dans cette série d'essais, la solution aqueuse renferme un sel de Ge (IV) la concentration de $10^{-2}$M en ce dernier; elle contient également de l'acide sulfurique (0,1 M), du sulfate de sodium (0,06 M) et/ou de la soude, en quantité appropriée pour l'obtention du pH indiqué dans la première ligne horizontale du tableau I. Le kérosène contient 0,2 mole de (nonyl-3-propényl-1)-7 hydroxy-8 quinoléine (nom commercial «Kelex 100»), 50 g c'est-à-dire 5% d'un tensioactif dont la nature est indiquée au tableau des résultats, ainsi qu'un certain volume de butanol ou de pentanol, précisé dans le tableau I.

Après un mélange rapide du kérosène, contenant les adjuvants sus-indiqués, avec la solution aqueuse de Ge à extraire, on laisse les deux phases formées se séparer, en notant le temps jusqu'à la fin de cette opération. Les volumes de chacune de ces phases sont notés et l'on détermine les pourcent des quantités initiales de Ge, d'extractant, de tensioactif, d'alcool et d'eau qui se retrouvent dans chacune des deux phases.

Ensuite, la microémulsion séparée est additionnée de 5% de NaOH, ce qui produit la résolution complète de cette microémulsion en une couche kérosénique et une couche aqueuse; cette dernière contient alors la totalité du Ge qui a été complexé dans le kérosène par l'extractant; on récupère ainsi le Ge initial, séparé de la majeure partie des substances qui pouvaient l'accompagner dans la solution aqueuse initiale.

Il résulte de ces essais qu'à pH inférieur à 8, le pour-cent de métal extrait est bien plus élevé que pour pH 12,5. D'autre part, avec un pH compris entre 0,5 et 7 (exemples 1 et 2) en présence d'un tensioactif non ionique ou anionique, la proportion de solution aqueuse initiale, retrouvée dans la microémulsion, peut être considérablement abaissée, ce qui se traduit par une pureté bien meilleure de la solution de Ge obtenue à la réextraction.

Quand aux vitesses d'extraction, elles sont 3 à 120 fois plus rapides que dans les extractions classiques, similaires, effectuées sans agent tensioactif (2 dernières lignes horizontales du tableau).

## Exemple 7

Dans cet exemple, on agit 1 litre de kérosène contenant 0,25 mole de dithiophosphate de bis (éthyl-2-hexyle) avec 1 l de solution aqueuse à $10^{-2}$M de $NiSO_4$ et $0,2M.H_2SO_4$. On ajoute 80 g de tensioactif constitué par du décyl éther glucose (Triton BG 10) et 200 ml de n-hexanol. Après la décantation en deux couches, la couche supérieure est constituée par une microémulsion.

Voisi les résultats de cet essai.

| | |
|---|---|
| pH | 0,6 |
| Volume de phase aqueuse pour 100 volumes de microémulsion obtenue | 97 |
| % de tensioactif initial retrouvé dans la microémulsion | 100 |
| % de Ni initial dans la microémulsion | 100 |
| % d'extractant initial dans la microémulsion | 100 |
| % d'hexanol initial dans la microémulsion | 99 |
| g de solution aqueuse dans 1 litre de microémulsion | 30 |
| Temps de l'extraction en min | 0,5 |
| Temps d'une extraction similaire sans tensioactif en min | 10 |

## Exemple 8

### Extraction de l'Al; Microémulsion type WINSOR I

La solution aqueuse à traiter renferme $5 \times 10^{-3}$M de $Al_2(SO_4)_3$ et 0,1M $H_2SO_4$. Son pH est 1.

On en mélange 1 litre avec 1 litre de kérosène, dans lequel on a dissous au préalable 0,2 mole de phosphate de di(éthyl-hexyle) en tant qu'extractant.

A l'ensemble, on ajoute 50 g de lauryl-sulfate de Na et 75 ml de n-pentanol et l'on agite brièvement.

Après décantation, le système se compose de deux couches distinctes: en haut celle de la majeure partie du kérosène initial, en bas une microémulsion transparente de kérosène dans l'eau. On est ainsi en présence d'un système à deux phases dont une organique et une microémulsion aqueuse, c'est-à-dire de type Winsor I.

L'examen de chacune des couches obtenues conduit aux résultats suivants.

| | Couche organique (supérieure) | Microémulsion aqueuse (inférieure) |
|---|---|---|
| Volume en ml | 920 | 1200 |
| Al % de l'Al total initial | 90,3 | 9,7 |
| % de lauryl-sulfate initial | 0 | 100 |
| % de l'extractant utilisé | 90 | 10 |
| % de n-pentanol utilisé | 66 | 34 |
| % de kérosène utilisé | 90 | 10 |

On voit que la majeure partie de l'Al se retrouve dans la phase organique d'où ce cation est récupéré aisément par réextraction classique. Le dixième environ, qui reste dans la microémulsion aqueuse, n'est pas perdu, parce que cette dernière est réutilisée pour la dissolution d'une nouvelle charge de sulfate d'aluminium. Cette réutilisation fait également que, dans une nouvelle extraction, on n'a pas besoin d'ajouter de lauryl-sulfate de Na frais.

*Tableau I*

| Exemples: | 1 | 2 | 3 | 4 | 5 | 6 |
|---|---|---|---|---|---|---|
| pH de la solution aqueuse. . . . . . | 1 | 1 | 1 | 4 | 7 | 12,5 |
| Vol. d'alcool utilisé en % du kérosène: | | | | | | |
| n-butanol . . . . . . . . . . . | — | — | — | 35 | 40 | 40 |
| n-pentanol . . . . . . . . . . | 28 | 20 | 20 | — | — | — |
| Vol. de phase aqueuse pour 100 vol. de | | | | | | |
| microémulsion obtenue. . . . . . | 97 | 98 | 96 | 95 | 95 | 95 |
| % de tensioactif initial retrouvé dans la | | | | | | |
| microémulsion: | | | | | | |
| Dodécyl-benzène-sulfate de Na . . . | — | — | — | 99,3 | 99 | 99 |
| Nonyl-phénol-heptaéthoxylé . . . . | 100 | — | — | — | — | — |
| Lauryl-sulfate de Na . . . . . . . | — | 100 | — | — | — | — |
| Décyl-éther de glucose (Triton BG 10) | — | — | 100 | — | — | — |
| % Ge initial dans la microémulsion à | | | | | | |
| l'équilibre . . . . . . . . . . | 99,6 | 99,6 | 99,5 | 99,5 | 99,5 | 3 |
| % d'extractant initial dans la micro- | | | | | | |
| émulsion à l'équilibre. . . . . . | 100 | 100 | 100 | 100 | 100 | 100 |
| % d'alcool initial dans la microémulsion | 99 | 99 | 99 | 90 | 90 | 90 |
| % de solution aqueuse initiale dans la | | | | | | |
| microémulsion . . . . . . . . | 2,3 | 2,0 | 4,0 | 6,6 | 5,5 | 5,5 |
| g de solution aqueuse dans 1 litre de | | | | | | |
| microémulsion . . . . . . . . | 23 | 20 | 40 | 66 | 55 | 55 |
| Temps de l'extraction en min . . . . | 10 | 10 | 2 | 2 | 2 | 2 |
| Temps d'une extraction similaire sans | | | | | | |
| tensioactif, en min . . . . . . . . | 30 | 30 | 30 | 240 | 240 | ∞ |

## Revendications

1. Procédé pour l'extraction d'un composé métallique à partir d'une solution aqueuse, au moyen d'un liquide hydrophobe, avec production d'une microémulsion qui prend la place d'une des phases à l'équilibre, caractérisé en ce que la solution aqueuse, traitée, présente un pH d'environ 0,5 à 8 et que l'agent tensioactif employé est non ionique ou anionique, actif dans ce domaine de pH.

2. Procédé suivant la revendication 1, caractérisé en ce que la microémulsion est constituée en majeure partie par le liquide hydrophobe contenant de l'eau (type Winsor II), dans laquelle se retrouve à l'équilibre chimique le composé métallique à extraire et qu'elle surnage une couche aqueuse.

3. Procédé suivant la revendication 1, caractérisé en ce que la microémulsion est constituée en majeure partie par de l'eau (type Winsor I) contenant le liquide hydrophobe et qu'elle est surmontée par une couche de liquide hydrophobe qui contient à l'équilibre chimique le composé métallique à extraire.

4. Procédé suivant une des revendications précédentes, dans lequel le liquide hydrophobe, ou diluant, est constitué par un hydrocarbure éventuellement halogéné, en particulier le kérosène, et il tient en solution un extractant, c'est-à-dire une substance susceptible de former, avec le métal à extraire, un composé soluble dans le liquide hydrophobe, dans les conditions de pH de 0,5 à 8.

5. Procédé suivant une des revendications précédentes, dans lequel le tensioactif anionique est un dérivé sulfoné ou sulfaté d'un composé alkyle arylique ou d'un acide ou alcool gras.

6. Procédé suivant une des revendications précédentes, dans lequel le composé tensioactif non ionique est du type alcool linéaire polyéthoxylé, alkylphénol polyéthoxylé, alkyl-éther ou alkylester d'un sucre.

7. Procédé suivant une des revendications précédentes, dans lequel l'adjuvant cotensioactif est un alcool en $C_3$ à $C_{16}$ présent à la proportion de 0,03 à 0,5 volume par volume de liquide hydrophobe, et de préférence de 0,05 à 0,4.

8. Application du procédé suivant une des revendications 1 à 7 à des solutions aqueuses des métaux des groupes II à VIII de la Classification périodique des Eléments.


## Claims

1. Process for the extraction of a metal compound from an aqueous solution by means of a hydrophobic liquid, with production of a microemulsion which takes the place of one of the phases in equilibrium, characterized in that the aqueous solution treated has a pH of about 0.5 - 8 and that the surfactant employed is nonionic or anionic and active in this pH range.

2. Process according to claim 1, characterized in that the microemulsion mainly comprises the hydrophobic liquid containing water (Winsor Type II), in which the metal compound to be extracted is contained at chemical equilibrium and which overlies an aqueous layer.

3. Process according to claim 1, characterized in that the microemulsion mainly comprises water containing the hydrophobic liquid (Winsor Type I) and is surmounted by a layer of the hydrophobic liquid which at chemical equilibrium contains the metal compound to be extracted.

4. Process according to any of the preceding claims, in which the hydrophobic liquid or diluent is constituted by a hydrocarbon which may be halogenated, in particular kerosene, and maintains in solution an extractant, namely a substance capable of forming with the metal to be extracted a compound soluble in the hydrophobic liquid, under pH conditions of 0.5 to 8.

5. Process according to any of the preceding claims, in which the anionic surfactant is a sulphonated or sulphated derivative of an alkyl aryl compound or a fatty or acid alcohol.

6. Process according to any of the preceding claims, in which the nonionic surfactant is of the polyethyoxylated linear alcohol, polyethoxylated alkylphenol or sugar alkyl ether or alkyl ester type.

7. Process according to any of the preceding claims, in which the cosurfactant additive is a $C_3$ to $C_{16}$ alcohol, present in the proportion of 0.03 to 0.5 volume per volume of hydrophobic liquid and preferably from 0.05 to 0.4.

8. Application of the process according to any of claims 1 to 7 to aqueous solutions of metals of Groups II to VIII of the Periodic Classification of the Elements.


## Patentansprüche

1. Verfahren zur Extraktion einer Metallverbindung aus einer wässrigen Lösung, mittels einer hydrophoben Flüssigkeit, unter Bildung einer Mikroemulsion, die die Stelle einer der Phasen im Gleichgewicht einnimmt, dadurch gekennzeichnet, dass die wässerige behandelte Lösung einen pH-Wert von etwa 0,5 bis 8 aufweist und dass das verwendete oberflächenaktive Mittel nichtionisch oder anionisch, aktiv in diesem pH-Bereich ist.

2. Verfahren nach Anspruch 1, dadurch gekennzeichnet, dass die Mikroemulsion, in der sich die zu extrahierende Metallverbindung im chemischen Gleichgewicht befindet, zum grössten Teil aus der hydrophoben Flüssigkeit, die Wasser enthält (Typ Winsor II), besteht, und dass sie auf einer wässrigen Schicht schwimmt.

3. Verfahren nach Anspruch 1, dadurch gekennzeichnet, dass die Mikroemulsion zum grössten Teil aus Wasser besteht (Typ Winsor I), das die hydrophobe Flüssigkeit enthält, und dass sich über ihr eine Schicht der hydrophoben Flüssigkeit befindet, die die zu extrahierende Metallverbindung im chemischen Gleichgewicht enthält.

4. Verfahren nach einem der vorhergehenden Patentansprüche, bei dem die hydrophobe Flüssigkeit oder das Verdünnungsmittel aus einem gegebenenfalls halogenierten Kohlenwasserstoff, insbesondere dem Kerosin, besteht, und ein Extraktionsmittel, d. h. eine Substanz in Lösung enthält, die mit dem zu extrahierenden Metall eine Verbindung bilden kann, die in der hydrophoben Flüssigkeit unter den pH-Bedingungen von 0,5 bis 8 löslich ist.

5. Verfahren nach einem der vorhergehenden Patentansprüche, bei dem das anionische oberflächenaktive Mittel ein sulfoniertes oder sulfatiertes Derivat einer Alkylarylverbindung oder einer Fettsäure oder eines Fettalkohols ist.

6. Verfahren nach einem der vorhergehenden Ansprüche, bei dem die nichtionische oberflächenaktive Verbindung vom Typ linearer polyethoxylierter Alkohol, polyethoxyliertes Alkylphenol, Alkylether oder Alkylester eines Zuckers ist.

7. Verfahren nach einem der vorhergehenden Ansprüche, bei dem der co-oberflächenaktive Zusatz ein Alkohol mit $C_3$ bis $C_{16}$ ist, der im Anteil von 0,03 bis 0,5 Volumen pro Volumen der Hydrophoben Flüssigkeit und vorzugsweise von 0,05 bis 0,4 vorhanden ist.

8. Anwendung des Verfahrens nach einem der Ansprüche 1 bis 7 auf wässrige Lösungen von Metallen der Gruppen II bis VIII des Periodensystems der Elemente.